# EUROPEAN PATENT APPLICATION

(11) **EP 2 130 602 A2**
(43) Date of publication of application: **09.12.2009**
(21) Application number: 09006088.0
(22) Date of filing: 04.05.2009
(51) Int. Cl.: B01J 35/04, B01J 29/00, B01D 53/92, F01N 3/00

(54) **Honeycomb structure**

(30) Priority: 20.05.2008 WO PCT/JP2008/059267
(71) Applicant: Ibiden Co., Ltd., Ogaki-shi, Gifu 503-8604 (JP)
(72) Inventor: Ohno, Kazushige, Ibi-Gun Gifu 501-0695 (JP); Kunieda, Masafumi, Ibi-Gun Gifu 501-0695 (JP); Ido, Takahiko, Ibi-Gun Gifu 501-0695 (JP)
(74) Representative: HOFFMANN EITLE

(57) **Abstract**

A disclosed honeycomb structure includes a honeycomb unit which includes inorganic particles, an inorganic binder and inorganic fibers and has multiple cells that are separated by cell walls in such a manner as to extend in a longitudinal direction from one end face to another end face. The inorganic fibers are formed of a bio-soluble inorganic compound.

## Description

### BACKGROUND OF THE INVENTION

### 1. Field of the Invention

The present invention relates to a honeycomb structure.

### 2. Description of the Related Art

Many technologies have been developed to convert exhaust gases of automobiles; however, countermeasures currently being implemented are hardly sufficient partly due to an increase in traffic. Both in Japan and worldwide, automobile emission regulations are being further tightened. In particular, controls on NOx in diesel emissions have become notably strict. Conventionally, a decrease of NOx has been achieved by controlling engine combustion systems; however, it has become difficult for this control alone to provide a sufficient NOx decrease. As diesel NOx conversion systems for addressing such an issue, NOx reduction systems (referred to as SCR systems) which use ammonia as the reducing agent have been proposed.

Honeycomb structures are known which are used for such systems installed in automobiles and include zeolite as a catalytic component. It is, however, often the case that honeycomb structures including zeolite generally have a reduced strength. In order to deal with this problem, Patent Document 1 proposes a zeolite-containing honeycomb structure which includes 5 to 30 wt% of inorganic fibers. Patent Document 1 discloses that according to the zeolite-containing honeycomb structure to which inorganic fibers are added, it is possible to prevent generation of cracks during firing in the honeycomb structure manufacturing process.

On the other hand, there is a danger that fine fibrous materials, such as asbestos, may pose health hazards to humans, and especially if the fibrous materials enter people's lungs, they act for very long periods of time and may cause diseases, such as cancer and emphysema. Accordingly, the European Union (EU) classifies fibrous materials as carcinogenic to humans in EU Directive 97/69/EC. According to the EU directive, bio-soluble inorganic fibers are classified as category 0, which means no carcinogenic risks to humans. Note that according to EU Directive 97/69/EC, asbestos is classified as category 3 (carcinogenic to humans); carbon fibers are classified as category 2 (probably carcinogenic); and rock wool, glass wool and silica wool are classified as category 1 (possibly carcinogenic).

Patent Document 2 discloses a honeycomb structure used for removing particulates in vehicular exhaust. According to Patent Document 2, silica and an alkali metal compound, an alkaline earth metal compound, or a boron compound is included in inorganic fibers used for a seal material layer of a porous ceramic honeycomb structure and in a honeycomb structure obtained by molding inorganic fibers. In this way, the inorganic fibers and the honeycomb structure are rendered bio-soluble, thereby reducing the carcinogenic risks to humans.
[Patent Document 1] Japanese Laid-open Patent Application Publication No. S61-171539
[Patent Document 2] International Publication No. 2005/110578

As to honeycomb structures, like ones described in Patent Document 1, the influence of inorganic fibers on living bodies are not taken into consideration, and bioinsoluble fibers, such as alumina fibers and silica-alumina fibers, are used in the honeycomb structures.

As to the honeycomb structure described in Patent Document 2, bio-soluble inorganic fibers are used in the sealing material of the porous ceramic and the inorganic honeycomb structure. The invention of Patent Document 2 aims at removing particulates from the exhaust gas, and essentially aims at manufacturing a honeycomb structure having a particulate filtration system. Therefore, Patent Document 2 does not mention the use of inorganic fibers for the purpose of improving the strength of the honeycomb structure including inorganic particles, such as zeolite, which are used for converting NOx and the like.

### SUMMARY OF THE INVENTION

In view of the above problems, the present invention aims at providing a honeycomb structure which includes inorganic fibers having less influence on living bodies and serves as a conversion catalyst for automobile exhaust gas, especially for NOx.

Next are described means of the present invention for solving the above-mentioned problems.

One aspect of the present invention may be to provide a honeycomb structure including a honeycomb unit which includes inorganic particles, an inorganic binder and inorganic fibers and has a plurality of cells that are separated by cell walls in such a manner as to extend in a longitudinal direction from one end face to another end face. The inorganic fibers are formed of a bio-soluble inorganic compound.

In the above-mentioned honeycomb structure, the inorganic fibers preferably include one of an alkali metal and an alkali earth metal and include 70 percent by mass or more of SiO₂ and 2 percent by mass or less of Al₂O₃.

In the above-mentioned honeycomb structure, the inorganic fibers preferably have an average fiber length of 30 to 150 µm and an average fiber diameter of 4 to 7 µm.

In the above-mentioned honeycomb structure, the inorganic particles preferably include at least one selected from the group consisting of zeolite, alumina, titania, silica, zirconia and ceria.

In the above-mentioned honeycomb structure, the inorganic particles preferably include zeolite.

In the above-mentioned honeycomb structure, zeolite preferably includes secondary particles, an average particle diameter of which is 0.5 to 10 µm.

In the above-mentioned honeycomb structure, zeolite preferably has at least one selected from the group consisting of β, Y, ferrierite, ZSM-5, mordenite, faujasite, zeolite A and zeolite L.

In the above-mentioned honeycomb structure, zeolite preferably has a mole ratio of silica to alumina (silica/alumina ratio) ranging from 30 to 50.

In the above-mentioned honeycomb structure, ions of zeolite are preferably exchanged with at least one selected from the group consisting of Fe, Cu, Ni, Co, Zn, Mn, Ti, Ag and V.

In the above-mentioned honeycomb structure, the inorganic binder preferably includes at least one selected from the group consisting of alumina sol, silica sol, titania sol, liquid glass, sepiolite sol and attapulgite sol.

In the above-mentioned honeycomb structure, the honeycomb unit preferably has an aperture ratio of 50 to 65%.

In the above-mentioned honeycomb structure, the cell walls preferably have a porosity of 25 to 40%.

In the above-mentioned honeycomb structure, a thickness of each of the cell walls is preferably 0.15 to 0.35 mm.

In the above-mentioned honeycomb structure, multiple honeycomb units are preferably joined by interposing an adhesive.

### BRIEF DESCRIPTION OF THE DRAWINGS

FIG. 1A shows a perspective view of a honeycomb structure which includes multiple honeycomb units according to one embodiment of the present invention, and FIG. 1B shows a perspective view of a honeycomb structure which includes a single honeycomb unit according to one embodiment of the present invention; and
FIG. 2 is a perspective view of one honeycomb unit which is a component of the honeycomb structure of FIG. 1A.

### DETAILED DESCRIPTION OF THE PREFERRED EMBODIMENTS

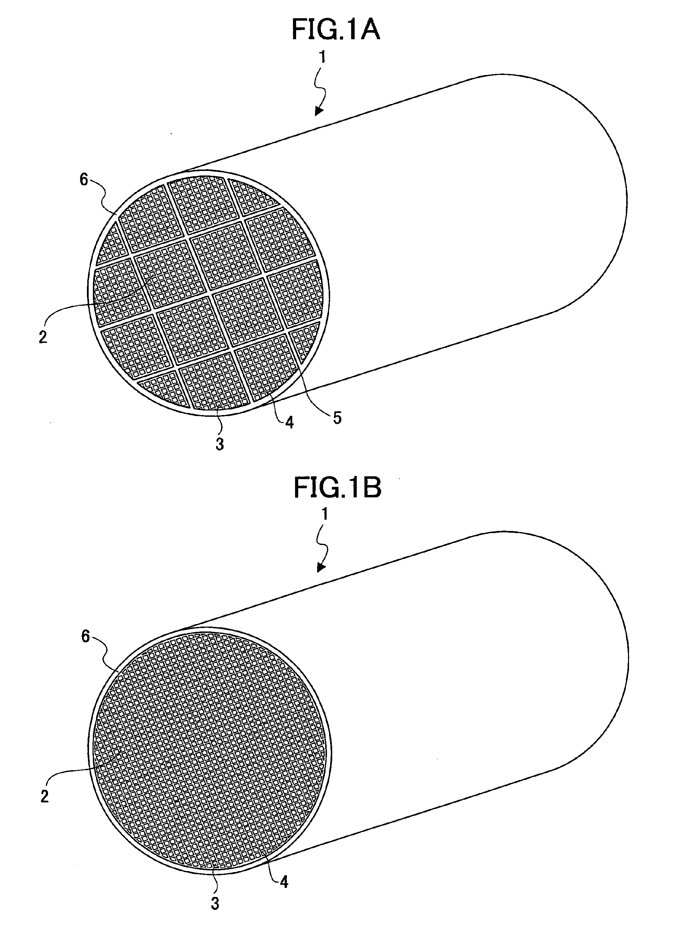

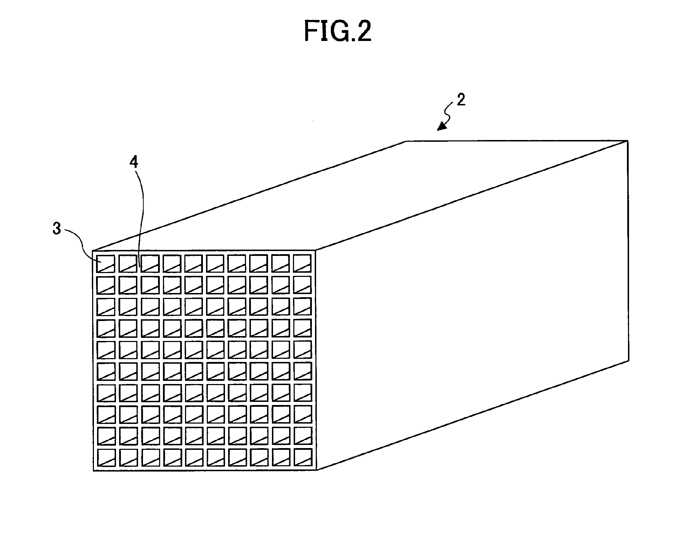

The honeycomb structure of one embodiment of the present invention includes one or more honeycomb units, each of which is a fired body including inorganic particles, an inorganic binder and inorganic fibers and having multiple cells that are separated by cell walls in such a manner as to extend in a longitudinal direction from one end face to another end face of the fired body. One example of such a honeycomb structure is illustrated in the perspective view of FIG. 1A. A honeycomb structure 1 of FIG. 1A includes multiple honeycomb units 2 joined to each other by an adhesive 5. Each honeycomb unit 2 is formed in such a manner that cells 3 are aligned parallel to one another in the longitudinal direction of the honeycomb unit 2. The lateral surface of the honeycomb structure 1 (the surface on which the cells 3 do not have their open ends) is preferably covered by a coating layer 6 in order to provide strength. As shown in the perspective view of FIG. 2, honeycomb unit 2 of the honeycomb structure 1 has multiple cells 3 that are separated by cell walls 4 in such a manner as to extend in the longitudinal direction of the honeycomb unit 2.

The inorganic fibers included in the honeycomb units 2 of the honeycomb structure 1 according to one embodiment of the present invention are made of a bio-soluble inorganic compound. The inorganic fibers made of the bio-soluble inorganic compound may completely dissolve in a living body within a predetermined period of time, however, a similar effect may still be achieved even if just a part of the inorganic fibers dissolves in a living body so that the molecular structure of the inorganic fibers are broken down or taken apart. The inorganic fibers preferably include at least one of a bio-soluble alkali metal and a bio-soluble alkaline earth metal, and include 70 percent by mass or more of SiO₂ and 2 percent by mass or less of Al₂O₃. Further preferably, the inorganic fibers have an average fiber length of 30 to 150 µm and an average fiber diameter of 4 to 7 µm.

In order to evaluate biosolubility of the inorganic fibers made of a bio-soluble inorganic compound, the degree of solubility of the inorganic compound in a physiological salt solution may be measured. For example, 0.5 g of inorganic fibers is put in 25 ml of physiological salt solution and shaken for five hours at 37 °C. Then, the resultant solution is filtered so as to remove solid inorganic fibers, and elements-such as silicon, sodium, calcium, magnesium and the like-in the extraction solution into which a part of the inorganic fibers has dissolved are measured by the atomic absorption method or the like. Note that in the evaluation process, a normal physiological salt solution is used. If a total of 100 ppm or more of the target compound is dissolved in the extraction solution, the inorganic fibers are regarded as being composed of a bio-soluble inorganic compound. In addition, based on the measurement result, the percentage of each substance eluted from the inorganic fibers can be calculated. In the case where the physiological salt solution includes measurement target elements, their concentrations are checked in advance and then subtracted from corresponding measured values.

A total of 100 ppm or more of the target compound being dissolved in the extraction solution means that a part of the inorganic fibers can be dissolved in a living body by the body temperature, and as a result, the inorganic fibers are broken down or taken apart and cannot maintain their molecular structure. Accordingly, even if the inorganic fibers are introduced into a living body, unlike asbestos, they do not get stuck in the living body and remain at one location for a long period of time, and therefore, have no adverse effect on the living body. In the present invention, it is preferable to use inorganic fibers classified as category 0 in EU Directive 97/69/EC.

As for specific bio-soluble compounds, many alkali metal compounds, alkaline earth metal compounds and boron compounds are known, and oxides and salt, such as Na, K, Mg, Ca, Ba and B, are examples of such. Bio-soluble fibers can be formed by including an oxide or salt (such as Na, K, Mg, Ca, Ba or B) in inorganic fibers of silica, alumina, silica-alumina, glass or the like, for example.

As for the inorganic fibers made of a bio-soluble inorganic compound, it is preferable to include 70 percent by mass or more of SiO₂ and 2 percent by mass or less of Al₂O₃. Note that it is undesirable if the inorganic fibers include 90 percent by mass or more of SiO₂ since the amount of the alkali metal or the alkali earth metal contained becomes too little. Al₂O₃ should be contained at 2 percent by mass or less, and no Al₂O₃ may be contained (i.e. 0 percent by mass). This is because many alkali metal and alkali earth metal silicates are generally bio-soluble; however, many alkali metal and alkali earth metal aluminates and aluminosilicates are bioinsoluble or have low biosolubilities.

The average fiber length and the average fiber diameter of the inorganic fibers are preferably 30 to 150 µm and 4 to 7 µm, respectively. If the average fiber length of the inorganic fibers is less than 30 µm, sufficient improvement in strength of the honeycomb unit 2 cannot be obtained. If the average fiber length of the inorganic fibers exceeds 150 µm, the inorganic fibers tend to become massed together at the time of manufacture of the honeycomb unit 2 and cause manufacturing problems, leading to difficulties in evenly dispersing the inorganic fibers in the honeycomb unit 2. If the average fiber diameter of the inorganic fibers is less than 4 µm, sufficient improvement in strength of the honeycomb unit 2 cannot be always obtained. If the average fiber diameter of the inorganic fibers exceeds 7 µm, the surface area of the inorganic fibers become small, and it is sometimes the case that sufficient improvement in strength of the honeycomb unit 2 cannot be obtained for the amount of the inorganic fibers contained.

### Honeycomb Unit

The honeycomb unit 2 of the honeycomb structure 1 according to one embodiment of the present invention has a so-called honeycomb configuration having a lot of cells (through-holes) 3 which extend parallel to one another in the longitudinal direction, as shown in FIG. 2. The cross-sectional shape of each cell 3 of the honeycomb unit 2 is not particularly limited. FIG. 2 illustrates an example in which each cell 3 has a square cross-sectional shape; however, the cross section of the cell 3 may be substantially triangular, substantially hexagonal or circular, or may be a combination of a quadrangle and an octagon.

Each cross-sectional surface (a surface on which the cells 3 have their open ends) at both end faces of the honeycomb unit 2 perpendicular to the longitudinal direction of the cells 3 preferably has an aperture ratio (opening ratio) of 50 to 65%. Here, the aperture ratio is the ratio of the aperture area to the cross-sectional surface area. The lower limit of the aperture ratio of the honeycomb unit is preferably 50% so as to reduce the pressure loss, and the upper limit of the aperture ratio is preferably 65% so as to ensure the amount of cell walls that provide catalytic conversion.

The porosity of the cell walls of the honeycomb unit 2 is preferably 25 to 40%. From a quantitative standpoint, if the porosity is less than 25%, the exhaust gas does not penetrate deep enough into the cell walls, whereby a sufficient NOx conversion rate may not be achieved. On the other hand, if the porosity exceeds 40%, the strength of the cell walls may be reduced.

The thickness of each cell wall of the honeycomb unit 2 is preferably between 0.15 mm and 0.35 mm, and more preferably between 0.15 mm and 0.27 mm. If the cell walls have a thickness of less than 0.15 mm, the strength of the honeycomb unit 2 may not be maintained. On the other hand, if the cell walls have a thickness of more than 0.35 mm, the exhaust gas is less likely to penetrate deep into the cell walls, resulting in a decrease in the NOx conversion performance.

The honeycomb unit 2 of the honeycomb structure 1 according to one embodiment of the present invention includes inorganic particles, an inorganic binder and inorganic fibers.

### Inorganic Particles

In the honeycomb structure 1 according to one embodiment of the present invention, the honeycomb unit 2 includes inorganic particles. The inorganic particles are the main ingredient that makes up the base material of the honeycomb unit 2, and may have a catalytic function. The inorganic particles included in the honeycomb unit 2 are not particularly limited, and examples of such include particles of zeolite, alumina, silica, zirconia, titania, ceria, mullite and precursors of them.

In the case where zeolite and inorganic particles other than zeolite are used as raw materials in the honeycomb unit 2 of the honeycomb structure 1 of one embodiment of the present invention, these particles preferably provide strong binding by dehydration condensation when alumina, zirconia or the like is subjected to a firing process. Among them, alumina or zirconia is preferable. In the case of alumina, γ-alumina or boehmite is preferably used. One kind selected from these particles may solely be used as the inorganic particles of the honeycomb unit 2, or two or more kinds may be used together. Zeolite is desirable in need of inorganic particles having a catalytic function. In addition, secondary particles of the inorganic particles other than zeolite preferably have an average particle diameter equal to or less than that of secondary particles of zeolite. In particular, the average particle diameter of the inorganic particles other than zeolite is preferably 1/10 to 1/1 of that of zeolite. Accordingly, the strength of the honeycomb unit 2 is increased by the binding strength of the inorganic particles having a small average particle diameter.

The inorganic particles other than zeolite included in the honeycomb unit 2 are preferably contained at 3 to 30 percent by mass, and more preferably 5 to 20 percent by mass. If the amount of the inorganic particles other than zeolite is less than 3 percent by mass, a sufficient contribution to the increase in strength of the honeycomb unit 2 cannot be achieved. On the other hand, if the amount of the inorganic particles other than zeolite exceeds 30 percent by mass, the amount of zeolite which contributes to the NOx conversion is reduced in comparison, resulting in a decrease in the NOx conversion performance.

### Zeolite

The particles of zeolite in the honeycomb unit 2 are bound by an inorganic binder.

Zeolite preferably includes secondary particles, and the average particle diameter of the secondary particles of zeolite is preferably 0.5 to 10 µm. Note that the average particle diameter of the secondary particles of zeolite may be obtained by measuring the raw-material particulate zeolite forming the secondary particles prior to the firing process of the honeycomb unit 2.

Here, zeolite may take any structure, for example, β-type, Y-type, ferrierite, ZSM-5, mordenite, faujasite, zeolite A, zeolite L or the like. One kind selected from them may solely be used, or a mixture of two or more kinds may be used instead.

As for zeolite, the mole ratio of silica to alumina (silica/alumina ratio) is preferably 30 to 50.

In addition, ion exchanged zeolite, which is formed by exchanging ions of the above zeolite, is preferably used. Regarding the ion exchanged zeolite, the honeycomb unit 2 may be formed by using the ion exchanged zeolite, or the honeycomb unit 2 may be formed first and ions of zeolite are then exchanged. Here, zeolite whose ions are exchanged with, for example, at least one of the following metal species is preferably used as the ion exchanged zeolite: Fe, Cu, Ni, Co, Zn, Mn, Ti, Ag and V. For the ion exchanged zeolite, one metal species selected from the above metal species may solely be used, or two or more metal species may be used instead.

The honeycomb unit 2 of the honeycomb structure 1 according to one embodiment of the present invention preferably includes 230 g/L or more of zeolite per unit volume, and more preferably 245 to 270 g/L. If the apparent amount of zeolite per unit volume in the honeycomb unit 2 is less than 230 g/L, the NOx conversion performance may decrease. If the apparent amount of zeolite exceeds 270 g/L, the strength of the honeycomb unit 2, and therefore the strength of the honeycomb structure 1, may not be maintained when the honeycomb unit 2 functioning as a NOx purification catalyst is formed with its necessary openings.

Zeolite in the honeycomb unit 2 of the honeycomb structure 1 according to one embodiment of the present invention is preferably contained at 60 to 80 percent by mass (relative proportion of zeolite in the honeycomb unit 2). Since zeolite contributes to the NOx conversion, it is preferable that a larger amount of zeolite be included in the honeycomb unit 2. However, the amounts of other component materials (e.g. the inorganic fibers and inorganic binder) would be reduced in order to increase the amount of zeolite, which leads to a decrease in strength of the honeycomb unit 2. On the other hand, if the aperture ratio of the honeycomb unit 2 is set too low in order to increase the amount of zeolite, the flow resistance of the exhaust gas in the NOx conversion process may become excessively high.

### Inorganic Binder

Since the honeycomb unit 2 is a fired product, only the solid contents are left in the honeycomb unit 2 after water and the like in the inorganic binder evaporate. In this specification, only the solid contents in the inorganic binder are referred to as the inorganic binder in the honeycomb unit 2. The inorganic binder in a raw material form is, for example, inorganic sol, a clay binder or the like. Specific examples of inorganic sol are alumina sol, silica sol, titania sol, sepiolite sol, attapulgite sol, liquid glass and the like. Specific examples of the clay binder are white earth, kaolin, montmorillonite, clays of a double-chain structure (sepiolite and attapulgite) and the like. One kind selected from these sols and clays may solely be used, or two or more kinds may be used together.

### Inorganic Fibers

The configuration characteristics of the inorganic fibers in the honeycomb unit 2 include the aspect ratio in addition to the above-mentioned average fiber length and average fiber diameter and the distribution of the fiber length to be described below. The inorganic fibers have a large aspect ratio (fiber length/fiber diameter), which is in general effective especially for the improvement in bending strength of the honeycomb unit 2. The aspect ratio of the inorganic fibers is preferably 2 to 1000, more preferably 5 to 800, and still more preferably 10 to 500. If the aspect ratio of the inorganic fibers is less than 2, a sufficient contribution to the increase in strength of the honeycomb unit 2 cannot be obtained. On the other hand, if the aspect ratio of the inorganic fibers exceeds 1000, a die tends to be susceptible to clogging during a molding process of the honeycomb unit 2. In addition, the inorganic fibers tend to break during a molding process of the honeycomb unit 2, such as extrusion molding, and as a result, variation in the length of the inorganic fibers is caused, which may result in a decrease in the strength of the honeycomb unit 2. In the case where the inorganic fibers range in aspect ratio, the aspect ratio is expressed as an average. Provided that the inorganic fibers include a bio-soluble compound, they do not always have to be long fibers, and may be short fibers, such as whiskers.

The inorganic fibers in the honeycomb unit 2 are preferably contained at 3 to 50 percent by mass, more preferably 3 to 30 percent by mass, and still more preferably 5 to 20 percent by mass. If the amount of the inorganic fibers is less than 3 percent by mass, a sufficient contribution to the increase in strength of the honeycomb unit 2 cannot be obtained. On the other hand, if the amount of the inorganic fibers exceeds 50 percent by mass, the amount of zeolite which contributes to the NOx conversion is reduced in comparison, resulting in a decrease in the NOx conversion performance.

### Catalytic Component

A catalytic component may be supported on the cell walls of the honeycomb unit 2 in the honeycomb structure 1 of one embodiment of the present invention. The catalytic component is not particularly limited, and may include a noble metal, an alkali metal compound or an alkaline earth metal compound. Such a noble metal catalyst may be formed by selecting one or more kinds from, for example, platinum, palladium and rhodium. The alkali metal compound catalyst may include one or more kinds selected from, for example, potassium and sodium. The alkaline earth metal compound catalyst may be, for example, a barium compound or the like. **Manufacture of Honeycomb Unit**

Next is described an example of a method of manufacturing the honeycomb structure 2 of the above-described honeycomb structure 1 according to one embodiment of the present invention. First a honeycomb-unit molded body is manufactured by, for example, extrusion molding using a raw material paste that consists primarily of the above-described inorganic particles, inorganic fibers and inorganic binder.

For the inorganic fibers, the above-described bio-soluble inorganic compound is used. The inorganic fibers preferably include an alkali metal or an alkali earth metal, and include 70 percent by mass or more of SiO₂ and 2 percent by mass or less of Al₂O₃. Accordingly, biosolubility of the inorganic fibers is readily obtained. In addition, it is preferable to use inorganic fibers having an average fiber length of 30 to 150 µm. To set the average fiber length in this range allows the following problems to be prevented: in the manufacturing process of the honeycomb-unit molded body, breakage of the inorganic fibers during the extrusion molding or clogging of a die due to aggregation of the inorganic fibers; and insufficient dispersion of the inorganic fibers in the completed honeycomb unit 2, which leads to a reduced contribution to the increase in strength of the honeycomb unit 2. The inorganic fibers each having a length in a desired range may be manufactured by a classification process including pulverization, screening and the like.

The raw material paste preferably includes, as inorganic particles, zeolite and the above-described inorganic particles other than zeolite. In addition to the inorganic particles, an organic binder, a pore-forming material, a dispersion medium, a shaping aid and the like may accordingly be added to the raw material paste. The kinds of the organic binder are not particularly limited, and examples of such are one or more kinds of organic binders selected from methylcellulose, carboxylmethylcellulose, hydroxylethylcellulose, polyethylene glycol, phenolic resin, epoxy resin and the like. The relative quantity of the organic binder to be blended is preferably 1 to 10 parts by mass when the total of the solid contents of the raw materials is 100 parts by mass. As the pore-forming material, resin powder of, for example, an acrylate resin, a polyolefin resin, a polystyrene resin, a polyester resin or the like may be used. The organic binder and pore-forming material are important for adjusting the extrusion molding performance and the porosity of the honeycomb unit 2, and the amount of the pore-forming material is increased or decreased according to a desired porosity. The kinds of the dispersion medium are not particularly limited, and examples of such are water, organic solvents (e.g. toluene), alcohols (e.g. methanol) and the like. The kinds of the shaping aid are not particularly limited, and examples of such are ethylene glycols, dextrins, fatty acid soaps, polyalcohols and the like.

The raw material paste is not particularly limited, but is preferably mixed and kneaded. For instance, the paste may be mixed using a mixer, attriter or the like, or may be sufficiently kneaded by a kneader or the like. The method of forming and shaping the raw material paste is not particularly limited; however, extrusion molding, for example, is preferable to form a shape having cells.

Next, the resultant molded body is dried. A drying apparatus used to dry the molded body is not particularly limited, and examples of such are a microwave drying apparatus, a hot air drying apparatus, a dielectric drying apparatus, a reduced-pressure drying apparatus, a vacuum drying apparatus and a freeze drying apparatus and the like. Also, the dried molded body is preferably degreased. Degreasing conditions are not particularly limited and should be appropriately determined according to the kinds and amounts of organic substances included in the molded body; yet, the molded body is degreased preferably at 400 °C for about two hours. Next, the dried and degreased molded body is fired. Firing conditions are not particularly limited; yet, the molded body is fired preferably at 600 to 1200 °C, and more preferably at 600 to 1000 °C. If the firing temperature is less than 600 °C, sintering of zeolite and the like is not efficiently progressed, which may lead to a reduction in the strength of the honeycomb unit 2. On the other hand, if the firing temperature exceeds 1200 °C, zeolite crystals collapse or sintering is excessively progressed, which may lead to a failure to manufacture the porous honeycomb unit 2 having a desirable porosity.

### Honeycomb Structure

The honeycomb structure 1 of one embodiment of the present invention includes one or more honeycomb units 2. In the case where the honeycomb structure 1 includes two or more honeycomb units 2, the honeycomb units 2 are stacked in such a manner that the through-holes of the cells of each honeycomb unit 2 are aligned in the same direction. FIGS. 1A and 1B illustrate examples of the honeycomb structure 1 according to one embodiment of the present invention. The honeycomb structure 1 of FIG. 1A is formed by joining multiple honeycomb units 2 by the adhesive 5. Each honeycomb unit 2 is formed in such a manner that the cells 3 are aligned parallel to one another in the longitudinal direction of the honeycomb unit 2. FIG. 1B illustrates an example in which the honeycomb structure 1 includes a single honeycomb unit 2. Thus, the honeycomb structure 1 may include a single honeycomb unit 2 or two or more honeycomb units 2. The lateral face of the honeycomb structure 1 (the face parallel in the longitudinal direction of the cells 3) is preferably covered by the coating layer 6 in order to provide strength.

The honeycomb structures 1 shown in FIGS. 1A and 1B are circular in cross section; however, the honeycomb structure 1 of the present invention may be square, rectangular, hexagonal, fan-shaped or the like in cross section. The cross section of the honeycomb structure 1 is determined according to the usage; however, the cross sectional area is preferably constant in the longitudinal direction.

### Manufacture of Honeycomb Structure

First, a method of manufacturing the honeycomb structure 1 including multiple honeycomb units 2, as shown in FIG. 1A, is explained. The adhesive 5 is applied to the lateral face of each honeycomb unit 2 manufactured in the above-described manner, and the honeycomb units 2 are then joined together. The joined honeycomb units 2 are dried and solidified to form a honeycomb-unit assembly having a desired size. Then, a cutting process is performed on the lateral face of the honeycomb-unit assembly so as to form the honeycomb-unit assembly into a predetermined shape.

The adhesive 5 is not particularly limited, and examples of such are a mixture of inorganic binder and inorganic particles, a mixture of inorganic binder and inorganic fibers, a mixture of inorganic binder, inorganic particles and inorganic fibers, and the like. Furthermore, an organic binder may be added to these mixtures. The kinds of the organic binder are not particularly limited, and examples of such are one or more kinds selected from polyvinyl alcohols, methylcellulose, ethyl cellulose, carboxylmethylcellulose and the like.

The thickness of the adhesive layer joining the multiple honeycomb units 2 is preferably 0.5 to 2 mm. The number of honeycomb units 2 to be joined may be determined according to the size of the honeycomb structure 1. The honeycomb-unit assembly formed by joining multiple honeycomb units 2 to each other by the adhesive 5 may accordingly be cut and polished.

A coating material is applied on the peripheral surface (lateral face) of the honeycomb structure 1, on which the through-holes do not have their open ends, and then dried and solidified to form the coating layer 6. Accordingly, the peripheral surface of the honeycomb structure 1 is protected, and the strength of the honeycomb structure 1 is increased. The coating material is not particularly limited, and the same material as the adhesive 5 may or may not be used as the coating material. In addition, the coating material may or may not have the same compounding ratio of that of the adhesive 5. The thickness of the coating layer 6 is not particularly limited; yet, it is preferable to be 0.1 to 2 mm. The coating layer 6 may or may not be formed.

After joined by the adhesive 5, the multiple honeycomb units 2 are preferably heat-treated. In the case where the coating layer 6 is provided, a degreasing treatment is preferably carried out after the adhesive layer and the coating layer are formed. In the case where an organic binder is included in the adhesive layer and the coating layer 6, the organic binder is degreased by the degreasing treatment. Degreasing conditions may be determined according to the kinds and amounts of organic substances included in the adhesive layer and the coating layer 6; yet, degreasing at about 700 °C for two hours is preferable.

A schematic diagram of one example of the honeycomb structure 1 is given in FIG. 1A, in which the honeycomb structure 1 has a cylindrical external form. The honeycomb structure 1 of FIG. 1A is formed by joining multiple rectangular pillar honeycomb units 2, each of which is square in cross section perpendicular to the longitudinal direction of the through-holes. The honeycomb units 2 are joined by the adhesive 5, and the peripheral part of the joined honeycomb units 2 is cut so as to make the joined honeycomb units 2 into a cylindrical form, and then, the coating material is applied to form the coating layer 6. Alternatively, the cutting and polishing processes may be omitted by forming individual honeycomb units 2 to be, for example, fan-shaped and square in cross section and joining these honeycomb units 2 to shape the honeycomb structure 1 into a desired form.

Second, a method of manufacturing the honeycomb structure 1 including a single honeycomb unit 2, as shown in FIG. 1B, is explained. The difference of the honeycomb structure 1 of FIG. 1B from the honeycomb structure 1 of FIG. 1A is only that the honeycomb structure 1 of FIG. 1B includes only one honeycomb unit 2, and the honeycomb structure 1 of FIG. 1B is manufactured in a similar manner as the honeycomb structure 1 of FIG. 1A. Thus, in a similar manner as described above, the single honeycomb unit 2 is cut, polished and the like when needed so as to be shaped into a cylindrical form, and the above-mentioned adhesive 5 is applied to the peripheral part of the cylindrical honeycomb unit 2 to form the coating layer 6. Subsequently, the assembled structure is degreased. In this way, the honeycomb structure 1 including a single honeycomb unit 2 shown in FIG. 1B is manufactured.

### [Examples]

Next are described examples of the honeycomb structure 1 actually manufactured with various conditions. Note that the present invention is not limited to these examples.

### [Example 1]

### Manufacture of Honeycomb Unit

The honeycomb unit of Example 1 was manufactured as follows. The following substances were mixed together in a container for making a molding mixed composition: 2600 parts by mass of Fe ion-exchanged β zeolite (Fe ion-exchanged amount, 3 percent by mass; silica-alumina ratio, 40; average particle diameter, 2 µm (the "average particle diameter" refers to that of secondary particles, the same shall apply below)); 2600 parts by mass of alumina sol (solid concentration, 20 percent by mass); 780 parts by mass of inorganic fibers (average fiber diameter, 4 µm, and average fiber length, 80 µm, the chemical composition is shown in TABLE 2); and 410 parts by mass of methylcellulose as an organic binder. In addition, small amounts of plasticizer, surfactant and lubricant agent were added, and then, the mixture was further mixed and kneaded while water was added to adjust the viscosity to form a molding mixed composition. Subsequently, extrusion molding was performed by an extrusion molding machine using the molding mixed composition to thereby obtain a raw honeycomb-unit molded body. Fe ion-exchanged zeolite was formed by performing Fe ion-exchange, in which zeolite particles were impregnated in ammonium iron nitrate solution. The amount of ion-exchange was determined by an IPC emission spectrometer using an ICPS-8100 (Shimazu)).

The obtained raw honeycomb-unit molded body was sufficiently dried using a microwave drying apparatus and a hot air drying apparatus, and then subjected to a degreasing treatment at 400 °C for two hours. The raw honeycomb-unit molded body was subsequently fired at 700 °C for two hours to thereby manufacture a square pillar honeycomb unit (cross section 35 mm × 35 mm × length 150 mm) having quadrangular (square) cells. The manufactured square pillar honeycomb unit had an aperture ratio of 65%, a cell density of 73 cells/cm² and a wall thickness of 0.25 mm.

TABLE 1 shows the chemical composition, average fiber length and average fiber diameter of the inorganic fibers used to manufacture the honeycomb unit of Example 1.

**TABLE 1**

| | FIBER | | | | | | | | | EVALUATION |
|---|---|---|---|---|---|---|---|---|---|---|
| | FIBER TYPE | BIO-SOLUBLE FIBER (CHEMICAL COMPONENT wt%) | | | | | | DIAMETER (µm) | LENGTH (µm) | NOx CONVERSION RATE (%) |
| | | SiO₂ | Al₂O₃ | CaO | MgO | Ba₂O₃ | OTHERS | | | |
| EXAMPLE 1 | BIO-SOLUBLE | 70.8 | 0.8 | 25.9 | 0.6 | - | 1.9 | 4 | 80 | 94 |
| EXAMPLE 2 | BIO-SOLUBLE | 74.8 | 1.3 | 4.4 | 17.9 | - | 1.6 | 4 | 80 | 95 |
| COMPARATIVE EXAMPLE 1 | ALUMINUM BORATE | - | 68.0 | - | - | 32.0 | - | 1 | 30 | 94 |
| COMPARATIVE EXAMPLE 2 | ALUMINA | 5.0 | 95.0 | - | - | - | - | 6 | 100 | 94 |

### Manufacture of Honeycomb Structure

An adhesive paste was applied on the lateral face (face parallel to the longitudinal direction of the cells) of the manufactured plurality of square pillar honeycomb unit to form an adhesive layer having a thickness of 1 mm, and then dried and solidified at 120 °C. Subsequently, honeycomb units manufactured in the same manner were arranged in 4 rows and 4 columns and then joined to form a substantially rectangular pillar honeycomb-unit assembly. The adhesive paste was made by mixing 29 percent by mass of alumina particles (average particle diameter, 2 µm), 7 percent by mass of inorganic fibers (the same inorganic fibers used to manufacture the honeycomb units), 34 percent by mass of alumina sol (solid concentration, 20 percent by mass), 5 percent by mass of carboxylmethylcellulose and 25 percent by mass of water. Next, a cutting process was performed on the lateral side of the manufactured honeycomb-unit assembly using a diamond cutter so as to shape the honeycomb-unit assembly into a cylindrical form, and the above adhesive paste was applied on the outer surface of the lateral side of the cylindrical honeycomb-unit assembly so as to form a coating layer having a thickness of 0.5 mm. In this manner, a cylindrical honeycomb-unit assembly having the same shape as that of the honeycomb structure 1 of FIG. 1A was manufactured. The cylindrical honeycomb-unit assembly was then dried and solidified at 120 °C, and heated at 700 °C for two hours to degrease the adhesive layer and the coating layer. Consequently, a cylindrical honeycomb structure (diameter about 144 mm × length 150 mm) was manufactured.

### [Example 2 and Comparative Examples 1 and 2]

Apart from the differences in the type of inorganic fibers used (chemical composition), the fiber length and the fiber diameter, honeycomb units of Example 2 and Comparative Examples 1 and 2 were manufactured in the same manner as the honeycomb unit of Example 1. TABLE 1 shows manufacturing conditions changed for Example 2 and Comparative Examples 1 and 2.

### Measurement of NOx Conversion Rate of Honeycomb Structure

A cylindrical honeycomb portion was cut out from each of the honeycomb unit of Examples 1 and 2 and Comparative Examples 1 and 2 in such a manner as to have a diameter of 30 mm and a length of 50 mm, and used as an evaluation sample. The obtained evaluation samples were aged under a simulated condition by heating them at 700 °C for 48 hours, and then maintained at 300 °C. Then, 300 °Cheated vehicular exhaust simulant gas having a composition as shown in TABLE 2 was introduced into each evaluation sample at a space velocity (SV) of 35000/hr. For each evaluation sample, the reduction rate (%) of a NO component in the simulant gases was determined by measuring the NO component, within the evaluation sample, on both the gas inflow end and the gas discharge end. The reduction rate is regarded as the NOx conversion rate (%). Measurement results of the NOx conversion rates are shown in TABLE 1. It is understood from TABLE 1 that the NOx conversion rates were hardly influenced by the types of inorganic fibers, and were sufficient in all Examples 1 and 2 and Comparative Examples 1 and 2, ranging between 94% and 95%.

**TABLE 2**

| SIMULANT GAS | COMPOSITION |
|---|---|
| N₂ | BALANCE |
| CO₂ | 5vol% |
| O₂ | 14vol% |
| NO | 350ppm |
| NH₃ | 350ppm |
| H₂O | 5vol% |
| SV | 35000/hr |

The inorganic fibers included in the honeycomb structure of the present invention do not pose health hazards to living beings, and therefore, there is no need to worry about their influence to living beings, including human bodies, during manufacturing and use and after disposal. In addition, the honeycomb structure of the present invention is applicable as an environmentally-benign and safe catalyst and catalyst carrier used for automobile exhaust conversion. In particular, the honeycomb structure of the present invention is suitable for use as a NOx conversion catalyst of an SCR system (diesel emission conversion system), which uses zeolite.

## Claims

1. A honeycomb structure including a honeycomb unit which includes inorganic particles, an inorganic binder and inorganic fibers and has a plurality of cells that are separated by cell walls in such a manner as to extend in a longitudinal direction from one end face to another end face thereof, wherein
the inorganic fibers are formed of a bio-soluble inorganic compound.

2. The honeycomb structure as claimed in claim 1, wherein the inorganic fibers include one of an alkali metal and an alkali earth metal, and include 70 percent by mass or more of SiO₂ and 2 percent by mass or less of Al₂O₃.

3. The honeycomb structure according to any one of claims 1 and 2, wherein the inorganic fibers have an average fiber length of 30 to 150 µm and an average fiber diameter of 4 to 7 µm.

4. The honeycomb structure according to any one of claims 1 through 3, wherein the inorganic particles include at least one selected from the group consisting of zeolite, alumina, titania, silica, zirconia and ceria.

5. The honeycomb structure according to any one of claims 1 through 4, wherein the inorganic particles include zeolite.

6. The honeycomb structure according to any one of claims 4 and 5, wherein the zeolite includes secondary particles, an average particle diameter of which is 0.5 to 10 µm.

7. The honeycomb structure according to any one of claims 4 through 6, wherein the zeolite has at least one selected from the group consisting of β, Y, ferrierite, ZSM-5, mordenite, faujasite, zeolite A and zeolite L.

8. The honeycomb structure according to any one of claims 4 through 7, wherein the zeolite has a mole ratio of silica to alumina (silica/alumina ratio) ranging from 30 to 50.

9. The honeycomb structure according to any one of claims 4 through 8, wherein ions of the zeolite are exchanged with at least one selected from the group consisting of Fe, Cu, Ni, Co, Zn, Mn, Ti, Ag and V.

10. The honeycomb structure according to any one of claims 1 through 9, wherein the inorganic binder includes at least one selected from the group consisting of alumina sol, silica sol, titania sol, liquid glass, sepiolite sol and attapulgite sol.

11. The honeycomb structure according to any one of claims 1 through 10, wherein the honeycomb unit has an aperture ratio of 50 to 65%.

12. The honeycomb structure according to any one of claims 1 through 11, wherein the cell walls have a porosity of 25 to 40%.

13. The honeycomb structure according to any one of claims 1 through 12, wherein a thickness of each of the cell walls is 0.15 to 0.35 mm.

14. The honeycomb structure according to any one of claims 1 through 13, wherein a plurality of the honeycomb units is joined by interposing an adhesive.
